# EUROPEAN PATENT APPLICATION

(11) **EP 4 803 669 A1**
(43) Date of publication of application: **09.09.2026**
(21) Application number: 24885861.5
(22) Date of filing: 01.11.2024
(51) Int. Cl.: C25B 11/047, C25B 1/042, C25B 9/00, C25B 13/02

(54) **AIR ELECTRODE FOR SOLID OXIDE ELECTROLYZER, AND USE THEREOF**

(30) Priority: 02.11.2023 JP 2023188809
(71) Applicant: Niterra Co., Ltd., Nagoya-shi, Aichi 461-0005 (JP)
(72) Inventor: OKUYAMA, Yasuo, Nagoya-shi, Aichi 461-0005 (JP)
(74) Representative: Grünecker Patent- und Rechtsanwälte PartG mbB
(86) International application number: PCT/JP2024/039002
(87) International publication number: WO 2025/095095

(57) **Abstract**

Provided is a technique capable of suppressing occurrence of cracking in an air electrode and separation at the interface between the air electrode and a solid electrolyte layer during use of a solid oxide electrolysis cell. The air electrode of the solid oxide electrolysis cell is an air electrode containing a complex oxide having a perovskite structure and contains P at 1 ppm or greater and 500 ppm or less, Cr at 1 ppm or greater and 500 ppm or less, B at 1 ppm or greater and 500 ppm or less, and Si at 1 ppm or greater and 500 ppm or less with respect to the entire mass of the complex oxide.

## Description

### TECHNICAL FIELD

The present disclosure relates to an air electrode of a solid oxide electrolysis cell and use of the same.

### BACKGROUND ART

A solid oxide fuel cell (hereinafter referred to as an "SOFC") which generates electric power through electrochemical reaction between hydrogen and oxygen has been known. For example, a unit fuel cell, which is a constituent unit of the SOFC disclosed in Patent Document 1, includes an electrolyte layer containing a solid oxide, an air electrode disposed on one side of the electrolyte layer, and a fuel electrode disposed on the other side of the electrolyte layer. Oxygen ions dissociated from oxygen supplied to the air electrode move to the fuel electrode in accordance with the oxygen ion conductivity of the solid electrolyte and react with hydrogen contained in a fuel gas supplied to the fuel electrode, thereby producing water vapor and generating electricity.

It has been known that the above-mentioned SOFC can be used as a solid oxide electrolysis cell (hereinafter referred to simply as an "SOEC") by supplying electricity thereto in a reverse direction, and is used as an energy storage technique of a type of converting water vapor into hydrogen using surplus electric power, which is an issue in the process of introducing renewable energy. When water vapor is supplied to the fuel electrode and a current is caused to flow between the air electrode and the fuel electrode, the water vapor is electrolyzed, whereby hydrogen is generated from the fuel electrode, and the oxygen ions produced at the fuel electrode move to the air electrode in accordance with the oxygen ion conductivity of the solid electrolyte, and oxygen is generated from the air electrode.

### PRIOR ART DOCUMENT

### PATENT DOCUMENT

Patent Document 1: JP2023-080459A

### SUMMARY OF THE INVENTION

### PROBLEM TO BE SOLVED BY THE INVENTION

In general, in an SOFC, oxygen is consumed at the fuel electrode during use, which results in a decrease in gas pressure. In contrast, in an SOEC, oxygen is generated on the air electrode side during use, which results in an increase in gas pressure. In this case, a stress different from that in the SOFC acts, which brings about the possibility of occurrence of cracking in the air electrode and the possibility of occurrence of separation at the interface between the air electrode and the solid electrolyte layer.

### MEANS FOR SOLVING THE PROBLEM

The present disclosure can be realized as the following modes.
(1) According to one mode of the present disclosure, an air electrode of a solid oxide electrolysis cell is provided. The air electrode of this solid oxide electrolysis cell is an air electrode containing a complex oxide having a perovskite structure and contains P at 1 ppm or greater and 500 ppm or less, Cr at 1 ppm or greater and 500 ppm or less, B at 1 ppm or greater and 500 ppm or less, and Si at 1 ppm or greater and 500 ppm or less with respect to the entire mass of the complex oxide. According to the air electrode of the solid oxide electrolysis cell of this mode, occurrence of cracking in the air electrode and separation at the interface between the air electrode and a solid electrolyte layer can be suppressed during use of the solid oxide electrolysis cell.
(2) The air electrode of a solid oxide electrolysis cell described in the above paragraph (1) may contain P at 1 ppm or greater and 50 ppm or less and B at 1 ppm or greater and 50 ppm or less with respect to the entire mass of the complex oxide. According to the air electrode of the solid oxide electrolysis cell of this mode, occurrence of cracking in the air electrode and separation at the interface between the air electrode and the solid electrolyte layer can be suppressed during use of the solid oxide electrolysis cell.
(3) According to still another mode of the present disclosure, a solid oxide electrolysis cell is provided. This solid oxide electrolysis cell includes the air electrode as described in the above paragraph (1) or (2), a fuel electrode, and a solid electrolyte layer disposed between the air electrode and the fuel electrode. According to the solid oxide electrolysis cell of this mode, occurrence of cracking in the air electrode and separation at the interface between the air electrode and the solid electrolyte layer can be suppressed during use of the solid oxide electrolysis cell.
(4) In the solid oxide electrolysis cell described in the above paragraph (3), a fuel gas containing water vapor may be supplied to the fuel electrode at a flow rate of 100 to 130 liters/(min·cm²). According to the solid oxide electrolysis cell of this mode, during use of the solid oxide electrolysis cell, hydrogen and oxygen are generated, and thus, stresses act on the solid electrolyte layer. However, occurrence of cracking in the air electrode and separation at the interface between the air electrode and the solid electrolyte layer can be suppressed effectively during use of the solid oxide electrolysis cell.
(5) In the solid oxide electrolysis cell described in the above paragraph (3) or (4), a gas containing oxygen may be supplied to the air electrode at a flow rate of 30 to 50 liters/(min·cm²). According to the solid oxide electrolysis cell of this mode, during use of the solid oxide electrolysis cell, hydrogen and oxygen are generated, and thus, stresses act on the solid electrolyte layer. However, occurrence of cracking in the air electrode and separation at the interface between the air electrode and the solid electrolyte layer can be suppressed effectively during use of the solid oxide electrolysis cell.
(6) In the solid oxide electrolysis cell described in any one of the above paragraphs (3) to (5), an air chamber that the air electrode faces may have a volume of 9 cm³ to 11 cm³. According to the solid oxide electrolysis cell of this mode, during use of the solid oxide electrolysis cell, hydrogen and oxygen are generated, and thus, stresses act on the solid electrolyte layer. However, occurrence of cracking in the air electrode and separation at the interface between the air electrode and the solid electrolyte layer can be suppressed effectively during use of the solid oxide electrolysis cell.
(7) According to still another mode of the present disclosure, a separator-equipped cell is provided. This separator-equipped cell includes the solid oxide electrolysis cell as described in any one of the above paragraphs (3) to (6) and a separator which is disposed on the solid electrolyte layer and has an opening at its center. According to the separator-equipped cell of this mode, occurrence of cracking in the air electrode and separation at the interface between the air electrode and the solid electrolyte layer can be suppressed during use of the solid oxide electrolysis cell.
(8) According to still another mode of the present disclosure, an electrolysis stack in which a plurality of the solid oxide electrolysis cells as described in any one of the above paragraphs (3) to (6) are stacked is provided. According to the electrolysis stack of this mode, occurrence of cracking in the air electrode and separation at the interface between the air electrode and the solid electrolyte layer can be suppressed during use of the solid oxide electrolysis cell.
(9) According to still another mode of the present disclosure, a hot module is provided. This hot module includes the electrolysis stack as described in the above paragraph (8), a vaporizer for producing water vapor to be supplied to the electrolysis stack, a heat exchanger for performing heat exchange with a gas to be supplied to the electrolysis stack, a heater for heating the electrolysis stack, and a heat insulator in which the electrolysis stack, the vaporizer, the heat exchanger, and the heater are disposed. According to the hot module of this mode, occurrence of cracking in the air electrode and separation at the interface between the air electrode and the solid electrolyte layer can be suppressed during use of the solid oxide electrolysis cell.
(10) According to still another mode of the present disclosure, a hydrogen production apparatus including the hot module as described in the above paragraph (9) is provided. According to the hydrogen production apparatus of this mode, occurrence of cracking in the air electrode and separation at the interface between the air electrode and the solid electrolyte layer can be suppressed during use of the solid oxide electrolysis cell.

Notably, the present invention can be realized in various modes. For example, the present invention can be realized as a method of manufacturing a solid oxide electrolysis cell.

### BRIEF DESCRIPTION OF THE DRAWINGS

[FIG. 1] Perspective view showing the exterior structure of an electrolysis stack which is one embodiment of the present disclosure.
[FIG. 2] Exploded schematic view of the electrolysis stack cut along a line II-II of FIG. 1.
[FIG. 3] Schematic top view of a cell with a separator.
[FIG. 4] Block diagram of a hydrogen production apparatus.
[FIG. 5] Flowchart used for describing a method of producing the material of an air electrode by using a solid-phase method.
[FIG. 6] Flowchart used for describing a method of producing the material of the air electrode by using a liquid-phase method.

### MODES FOR CARRYING OUT THE INVENTION

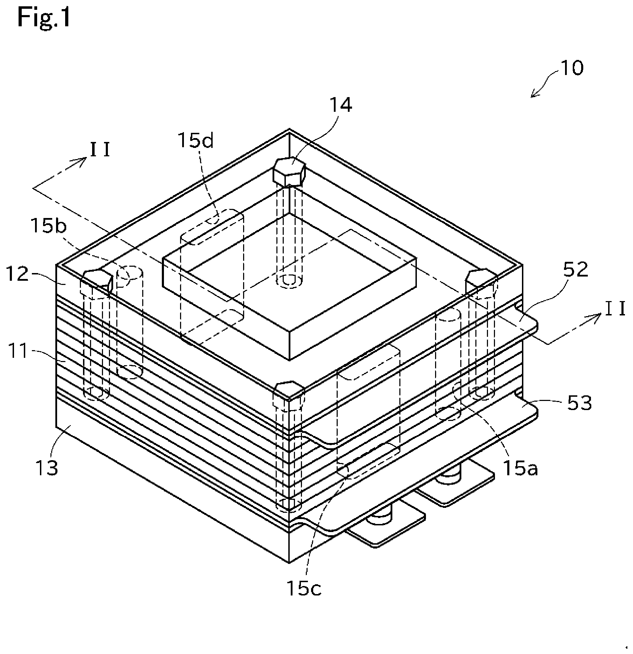

FIG. 1 is a perspective view showing the exterior structure of an electrolysis stack 10 which is one embodiment of the present disclosure. The electrolysis stack 10 in the present embodiment is a stack of solid oxide electrolysis cells (SOECs). In FIG. 1, one example of the structure of the electrolysis stack 10 is shown.

The electrolysis stack 10 includes a plurality of quadrangular reaction units 11 stacked in a thickness direction and generally quadrangular end plates 12 and 13 which sandwich the reaction units 11 in the thickness direction. Bolts 14 are disposed at four corners of a peripheral edge portion of the electrolysis stack 10. The bolts 14 penetrate the end plate 12, the reaction units 11, and the end plate 13 in the thickness direction. The reaction units 11 and the end plates 12 and 13 are fastened with the bolts 14.

The electrolysis stack 10 includes a terminal plate 52 disposed between the end plate 12 and a reaction unit 11 and a terminal plate 53 disposed between the end plate 13 and a reaction unit 11. The reaction units 11 are connected in series between the terminal plates 52 and 53. Protruding portions of the terminal plates 52 and 53 function as terminals. Of course, the above-described configuration may be modified in such a manner that the terminal plates 52 and 53 are omitted, reaction units 11 located adjacent to the end plates 12 and 13 are electrically connected to the end plates 12 and 13, and the end plates 12 and 13 are used as the terminals of the electrolysis stack 10.

Four spaces which penetrate the electrolysis stack 10 in the thickness direction are formed in the peripheral edge portion of the electrolysis stack 10. The four spaces respectively function as a passage 15a through which a gas flows from the outside of the electrolysis stack 10 to the fuel chamber 33 (which will be described later) of each reaction unit 11, a passage 15b through which a gas flows from the fuel chamber 33 to the outside of the electrolysis stack 10, a passage 15c through which a gas flows from the outside of the electrolysis stack 10 to an air chamber 35 (which will be described later) of each reaction unit 11, and a passage 15d through which a gas flows from the air chamber 35 to the outside of the electrolysis stack 10.

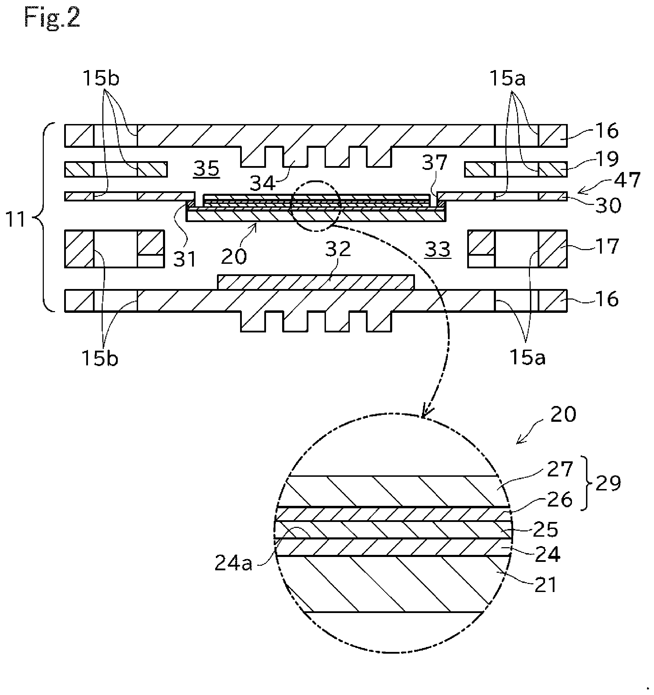

FIG. 2 is an exploded schematic view of the electrolysis stack 10 cut along a line II-II of FIG. 1 which passes through the passages 15a and 15b. FIG. 2 shows a schematic sectional view of one reaction unit 11, taken along the line II-II, in a state in which the components of the reaction unit 11 are separated in the thickness direction. The reaction unit 11 includes an inter connector 16, a fuel electrode frame 17, a cell with a separator (hereinafter referred to as the "separator-equipped cell") 47, and an air electrode frame 19 arranged in this order in the thickness direction. Notably, in FIG. 2, the thicknesses of respective portions are exaggerated.

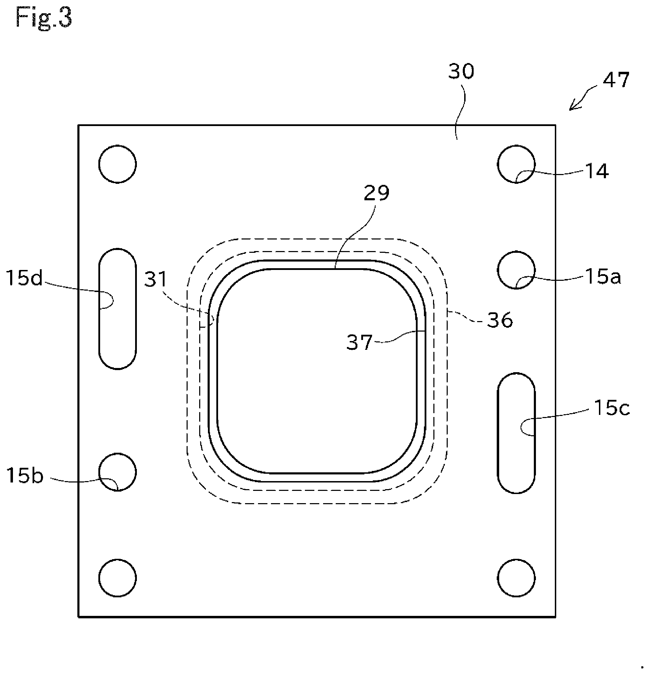

FIG. 3 is a schematic top view of the separator-equipped cell 47. The separator-equipped cell 47 includes an electrolysis cell 20 and a separator 30 disposed on the electrolysis cell 20. Holes (the passages 15a, 15b, 15c, and 15d) penetrate the inter connector 16, the fuel electrode frame 17, the separator 30, and the air electrode frame 19. The electrolysis cell 20 will be described later.

The separator 30 is a generally quadrangle frame-shaped member having an opening 37 which is larger than an air electrode 29, which will be described later. An example of the material of the separator 30 is stainless steel. The separator 30 is gastightly joined to a front surface 24a of a solid electrolyte layer 24 (which will be described later) by using a brazing filler metal 31, without being joined to the air electrode 29.

The inter connectors 16 are disposed at opposite ends of the electrolysis cell 20 in the thickness direction. Each inter connector 16 is formed of a generally quadrangle plate-shaped member having electrical conductivity. The inter connector 16 establishes electrical connection between reaction units 11 located adjacent to each other in the thickness direction. An example of the material of the inter connector 16 is stainless steel.

The fuel electrode frame 17 is a generally quadrangle frame-shaped member disposed between the inter connector 16 and the separator 30. An example of the material of the fuel electrode frame 17 is stainless steel. The fuel electrode frame 17 surrounds the electrolysis cell 20 and a current collector 32 provided at the center of the inter connector 16.

The current collector 32 establishes electrical connection between the fuel electrode 21 and the inter connector 16. An example of the material of the current collector 32 is a gas-permeable porous body formed of a metal such as Ni. The fuel chamber 33 surrounded by the inter connector 16, the fuel electrode frame 17, and the separator 30 is formed inside the fuel electrode frame 17.

The air electrode frame 19 is a generally quadrangle frame-shaped member disposed between the inter connector 16 and the separator 30. An example of the material of the air electrode frame 19 is an insulating material such as mica. The air electrode frame 19 surrounds the current collector 34 provided at the center of the inter connector 16. The current collector 34 establishes electrical connection between the air electrode 29 and the inter connector 16. The current collector 34 of the present embodiment is formed integrally with the inter connector 16. However, the present invention is not limited to such a structure. Needless to say, the current collector 34 may be a member which is separate from the inter connector 16.

An air chamber 35 surrounded by the inter connector 16, the air electrode frame 19, and the separator 30 is formed inside the air electrode frame 19. The separator 30 separates the fuel chamber 33 and the air chamber 35, thereby preventing mixing of the fuel gas within the fuel chamber 33 and the oxidizer gas (oxygen, air, etc.) within the air chamber 35.

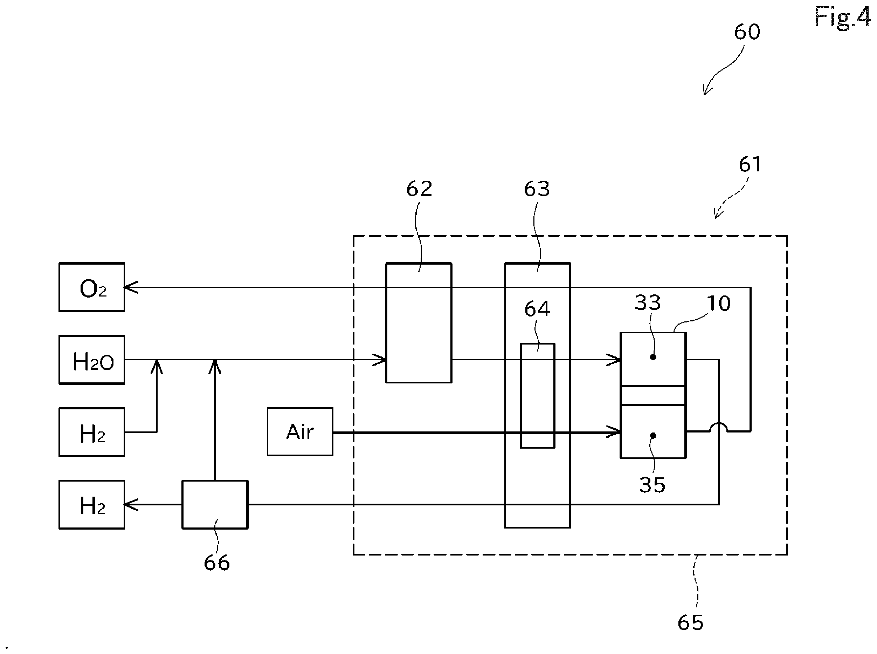

A hydrogen production apparatus 60 and a hot module 61 which include the electrolysis stack 10 will be described with reference to FIG. 4. FIG. 4 is a block diagram of the hydrogen production apparatus 60. The hydrogen production apparatus 60 is an apparatus for producing hydrogen from water and includes a hot module 61.

The hot module 61 includes the electrolysis stack 10, a vaporizer 62 which produces water vapor to be supplied to the electrolysis stack 10, a heat exchanger 63 which performs heat exchange between gases supplied to the electrolysis stack 10 and gases produced by the electrolysis stack 10, and a heater 64 which heats the electrolysis stack 10. In the hot module 61, in order to reduce heat dissipation, the electrolysis stack 10, the vaporizer 62, the heat exchanger 63, and the heater 64 are disposed in a heat insulator 65.

The vaporizer 62 includes a heat exchanger which performs heat exchange with a high-temperature gas containing oxygen produced by the electrolysis stack 10, and heats water to produce water vapor. The water vapor produced by the vaporizer 62 contains hydrogen which suppresses oxidation of a catalyst contained in the fuel electrode 21. The hydrogencontaining water vapor undergoes heat exchange, in the heat exchanger 63, with hydrogen and oxygen produced by the electrolysis stack 10, is heated by the heater 64 to an operating temperature of the electrolysis stack 10, and is supplied to the fuel chambers 33 of the electrolysis stack 10. Air undergoes heat exchange, in the heat exchanger 63, with hydrogen and oxygen produced by the electrolysis stack 10, is heated by the heater 64 to the operating temperature of the electrolysis stack 10, and is supplied to the air chambers 35 of the electrolysis stack 10.

Examples of the heat insulator 65 include heat-resistant fibers such as ceramic wool, refractory ceramic fiber (RCF), and biosoluble fiber (AES) and heat resistant containers formed of these heat-resistant fibers. The heat-resistant fibers are disposed to fill the gaps between the electrolysis stack 10, the vaporizer 62, the heat exchanger 63, and the heater 64. A condenser 66 is a device for cooling hydrogen gas, and the liquefied water is supplied to the vaporizer 62 as raw water.

### (Electrolysis cell)

As shown in FIG. 2, the electrolysis cell 20 includes the air electrode 29, the fuel electrode 21, and the solid electrolyte layer 24 provided between the air electrode 29 and the fuel electrode 21. Although the electrolysis cell 20 of the present embodiment includes a reaction prevention layer 25 between the solid electrolyte layer 24 and the air electrode 29, the reaction prevention layer 25 may be omitted. In addition, in the present embodiment, the air electrode 29 includes an air electrode functional layer 26 and an air electrode current collecting layer 27 in order of proximity to the solid electrolyte layer 24. Although no particular limitation is imposed on the shape of the electrolysis cell 20 as viewed from the upper side, examples of the shape of the electrolysis cell 20 include a square shape in which each side has a length of 1 to 10 cm, a rectangular shape in which the longer sides have a length of 5 to 30 cm and the shorter sides have a length of 3 to 15 cm, and a circular shape having a diameter of 10 cm.

The fuel electrode 21 is formed by using nickel oxide and oxygen ion conducting ceramic particles as materials. Nickel oxide (NiO) used as a material of the fuel electrode 21 converts to nickel through a reduction step which will be described later. The fuel electrode 21 of the present embodiment is a thin-plate-shaped porous fired body formed of nickel and YSZ (yttria-stabilized zirconia). Examples of the ceramic material having oxygen ion conductivity include YSZ (yttria-stabilized zirconia), ScSZ (scandia-stabilized zirconia), (Gd,Ce)O₂; i.e., GDC (gadolinium-doped ceria), (Sm,Ce)O₂; i.e., SDC (samarium-doped ceria), LaGaO₃ (lanthanum gallate), etc. The fuel electrode may include a single type of ceramic material or two or more types of ceramic materials. Although no particular limitation is imposed on the thickness of the fuel electrode 21, the thickness of the fuel electrode 21 is, for example, 0.3 to 3 mm. In the present embodiment, of the constituent members of the electrolysis cell 20, the fuel electrode 21 has the largest thickness and functions as a support (a support substrate; the most rigid member) of the electrolysis cell 20.

The solid electrolyte layer 24 is a thin-plate-shaped dense fired body. The solid electrolyte layer 24 is formed of, for example, a solid oxide such as YSZ (yttria-stabilized zirconia), ScSZ (scandia-stabilized zirconia), SDC (samarium-doped ceria), GDC (gadolinium-doped ceria), or a perovskite-type oxide. Example of the perovskite-type oxide include lanthanum gallate-based oxides having a perovskite-type structure. Although no particular limitation is imposed on the thickness of the solid electrolyte layer 24, the thickness of the solid electrolyte layer 24 is, for example, 3 to 30 µm.

The air electrode 29 contains a complex oxide having a perovskite structure. The composition of the complex oxide is expressed by the general formula ABO₃. However, the ratio among A, B, and O is not strictly required to be 1:1:3. The ideal unit lattice of the complex oxide having a perovskite structure expressed by the general formula ABO₃ is cubic, with element A located at the corners of the unit lattice, element B located at the body center of the unit lattice, and oxygen located at the face center of the unit lattice. In the present disclosure, the location of each corner of the unit lattice where element A is located will be referred to as the "site A," and the location of the body center of the unit lattice where element B is located will be referred to as the "site B."

At least one of La and Sr may be contained in the site A. Specific examples of such complex oxides, used as the material of the air electrode 29, include LSCF (i.e., (La,Sr)(Co,Fe)O₃), LSF (i.e., (La,Sr)FeO₃), LSC (i.e., (La,Sr)CoO₃), LNF (i.e., La(Ni,Fe)O₃), and SSC (i.e., (Sm,Sr)CoO₃). These complex oxides are substances having oxygen ion conductivity and electron conductivity and are also called mixed-conducting materials.

The air electrode 29 may contain a complex oxide as a "main component." The expression that a composition X contains a substance Y as a "main component" means that the proportion of the substance Y with respect to the entire composition X is preferably 60% by mass or more, more preferably 70% by mass or more, and further preferably 90% by mass or more. The air electrode 29 may contain components other than the complex oxide. The material of the air electrode 29 may be a powder (having an average particle diameter of, for example, about 0.1 µm to 5 µm), a crushed material (having an average particle diameter of, for example, about 5 µm to 500 µm), or a mass larger than the crushed material.

The air electrode current collecting layer 27 includes a complex oxide having a perovskite structure expressed by the general formula ABO₃. No particular limitation is imposed on the complex oxide, and examples of the complex oxide include LSCF, LSF, LSC, LNF, and SSC. The air electrode functional layer 26 may contain a component other than the complex oxide contained in the air electrode current collecting layer 27. The air electrode functional layer 26 may be converted to a composite with, for example, the material (ceria, zirconia, etc.) of the solid electrolyte layer 24, which will be described later. Although no particular limitation is imposed on the thickness of the air electrode current collecting layer 27, the thickness of the air electrode current collecting layer 27 may be, for example, 5 to 100 µm. Although no particular limitation is imposed on the thickness of the air electrode functional layer 26, the thickness of the air electrode functional layer 26 may be, for example, 5 to 20 µm.

It is preferred that the compositional distribution of the complex oxide contained in the air electrode 29 is highly uniform. Specifically, the standard deviation among measurements of each element atomic concentration of the complex oxide, which are obtained at 10 spots in one field of vision in a cross section of the air electrode 29, by means of an EDS (energy-dispersive X-ray spectroscopy), is preferably 13.5 or less, more preferably 7.5 or less. Specifically, when each element atomic concentration of the site A is determined and then the standard deviation in the atomic concentrations is obtained, the standard deviation obtained at the site A is preferably 13.5 or less, more preferably 7.5 or less. Similarly, when each element atomic concentration of the site B is determined and then the standard deviation in atomic concentration is obtained, the standard deviation obtained at the site B is preferably 13.5 or less, more preferably 7.5 or less.

For example, it is assumed that n different elements (A1, A2, A3, ... An) are contained in the site A. In the case where the standard deviation in each element atomic concentration is obtained on the basis of measurements of the element atomic concentration obtained at the 10 spots, when the standard deviation in element A1 atomic concentration is the larger than the standard deviations obtained for elements A2 to An, the standard deviation obtained for element A1 is preferably 13.5 or less, more preferably 7.5 or less. This also applies to the elements contained in the site B.

Even in the case of a layer which contains a component other than the complex oxide as in the air electrode functional layer 26, similarly to the air electrode current collecting layer 27, the standard deviation in each element atomic concentration of the site A or B of the complex oxide is preferably 13.5 or less, more preferably 7.5 or less. Accordingly, in the case where the air electrode functional layer 26 is constituted by the composite of the complex oxide and the material of the solid electrolyte layer 24, only the complex oxide appearing in a cross section of the air electrode functional layer 26 is essentially selected and observed.

Notably, one field of vision means an arbitrarily selected field of vision and can be selected in an area observed at a magnification of 100x to 5000x under an electron microscope such as SEM (scanning electron microscope), EPMA (electron probe micro analyzer), etc. When the distribution of atomic concentrations (which will be described later) is evaluated on the basis of observation at an excessively small magnification less than 100x, determination of the uniformity of the distribution of each element in a micro range, which is the subject of consideration in the present disclosure, tends to be difficult. Meanwhile, when the distribution of atomic concentrations is evaluated on the basis of observation at an excessively large magnification greater than 5000x, since the observation area becomes too narrow, the possibility that only regions where the distribution is nonuniform are observed or only regions where the distribution is uniform are observed tends to increase.

The analysis spot size of each of the 10 spots may be 1 µm or less. The positions of the 10 spots may be selected, for example, in accordance with 10 concentration levels set on the basis of the distribution of atomic concentrations measured by the EPMA. The 10 concentration levels are preferably set over the substantially entire range of the distribution of atomic concentrations. The 10 concentration levels can be set, for example, by dividing, into ten value ranges, the range between the maximum and minimum values of the characteristic X-ray intensity in the field of vision.

In addition, the air electrode 29 contains additives (P, Cr, B, and Si) at predetermined mass ratios with respect to the entire complex oxide. Specifically, when represented by the ratio with respect to the entire mass of the complex oxide, the air electrode 29 contains P at 1 ppm or greater and 500 ppm or less, preferably 1 ppm or greater and 50 ppm or less, more preferably 1 ppm or greater and 30 ppm or less. When represented by the ratio with respect to the entire mass of the complex oxide, the air electrode 29 contains Cr at 1 ppm or greater and 500 ppm or less, more preferably 1 ppm or greater and 100 ppm or less. When represented by the ratio with respect to the entire mass of the complex oxide, the air electrode 29 contains B at 1 ppm or greater and 500 ppm or less, preferably 1 ppm or greater and 50 ppm or less, more preferably 1 ppm or greater and 10 ppm or less. When represented by the ratio with respect to the entire mass of the complex oxide, the air electrode 29 contains Si at 1 ppm or greater and 500 ppm or less, preferably 1 ppm or greater and 100 ppm or less. The air electrode 29 may contain additives other than P, Cr, B, and Si. Examples of such additives other than P, Cr, B, and Si include small amounts of Na, Mg, Al, Ca, Sc, Ti, Ni, Zn, Y, Zr, Ba, Ce, and Gd. The amounts of these additives can be measured, for example, by analyzing the electrode material by GDMS (grow discharge mass spectrometry).

There is the possibility that the air electrode 29 separates from the solid electrolyte layer 24 due to a difference in thermal expansion coefficient therebetween. A conventional technique which overcomes such a problem is to provide, between the air electrode 29 and the solid electrolyte layer 24, a composite material obtained by mixing an electrolyte into the material of the air electrode 29. However, in the case where a Zr-based material is used as an electrolyte material, if the air electrode 29 contains Sr, a problem of production of SrZrO₃ (SZO) arises. Therefore, in such a case, for example, GDC (gadolinium-doped ceria) or SDC (samarium-doped ceria) is used as an electrolyte material to be mixed. Preferably, an intermediate layer formed by mixing an electrolyte and a complex oxide at a ratio of about 1:1 may be disposed between the air electrode 29 and the solid electrolyte layer 24. This intermediate layer corresponds to the air electrode functional layer 26.

Notably, the reaction prevention layer 25 may be formed between the solid electrolyte layer 24 and the air electrode functional layer 26 so as to suppress occurrence of a phenomenon in which YSZ in the solid electrolyte layer 24 and strontium in the air electrode functional layer 26 react with each other in the electrolysis cell 20 at the time of manufacture of the cell or during operation of the SOEC, and thus, the electrical resistance increases. Although no particular limitation is imposed, the reaction prevention layer 25 is preferably a thin-plate-shaped dense fired body formed of ceria. Although no particular limitation is imposed on ceria, examples of the ceria species include GDC (gadolinium-doped ceria) and SDC (samarium-doped ceria).

When water vapor is supplied to the fuel electrode 21, a gas, including oxygen, is supplied to the air electrode 29, and a current is caused to flow between the fuel electrode 21 and the air electrode 29, the electrolysis cell 20 operates as an SOEC and chemical reactions expressed by the following formulas (1) and (2) occur. As a result, hydrogen is generated from the fuel electrode 21, and oxygen is generated from the air electrode 29.

H₂O + 2e⁻ → H₂ + O₂⁻ (at the fuel electrode 21) (1)

O₂⁻ → (1/2)·O₂ + 2e⁻ (at the air electrode 29) (2)

In the electrolysis cell 20 used as an SOEC, in general, an electrically conductive connection member for current collection (the inter connector 16) is joined and fixed to each of the fuel electrode 21 and the air electrode 29 by using a bonding agent, and a potential difference is applied between the fuel electrode 21 and the air electrode 29 through the inter connector 16, whereby a current flows between the fuel electrode 21 and the air electrode 29. The hydrogen gas generated from the fuel electrode 21 is collected.

When the electrolysis cell 20 is used, a fuel gas containing water vapor may be supplied to the fuel electrode 21, for example, at a flow rate of 90 to 140 liters/(min·cm²) or at a flow rate of 100 to 130 liters/(min·cm²). In the case of co-electrolysis, a gas containing water vapor and CO² may be supplied as the fuel gas. Notably, in the case of a stack in which a plurality of cells are stacked, naturally, the amount of the fuel gas to be supplied is increased, by using a blower, a pump, or the like, in accordance with the number of cells stacked.

When the electrolysis cell 20 is used, a gas containing oxygen may be supplied to the air electrode 29, for example, at a flow rate of 20 to 60 liters/(min·cm²) or at a flow rate of 30 to 50 liters/(min·cm²). Oxygen gas or air may be used as the gas containing oxygen. Notably, in the case of a stack in which a plurality of cells are stacked, naturally, the amount of the gas supplied to the air electrode side is increased, by using a blower, a pump, or the like, in accordance with the number of cells stacked.

Although no particular limitation is imposed of the volume of the air chamber 35 which the air electrode 29 faces, the volume of the air chamber 35 is preferably 8 cm³ to 13 cm³, more preferably 9 cm³ to 11 cm³. The volume of the air chamber 35 which the air electrode 29 faces is the volume per cell and means the volume obtained by removing the volumes of portions of the space occupied by the current collecting members, etc.

### (Manufacturing method)

Next, an example of a method of manufacturing the electrolysis cell 20 will be described.

### (Formation of green sheet for the fuel electrode)

Organic beads (pore-forming material), butyral resin, DOP (plasticizer), FLOWLEN G-700 (dispersant), and a mixed solvent of toluene and ethanol are added to a powder mixture of NiO powder and YSZ powder, followed by mixing with a ball mill, thereby preparing a slurry. The organic beads are spherical particles formed of, for example, a polymer such as poly(methyl methacrylate) or polystyrene. During firing which will be described later, the organic beads burn, and pores are formed at the locations where the organic beads were present. A thin film is formed from the obtained slurry by the doctor blade method, whereby a green sheet for the fuel electrode which has a predetermined thickness (for example, 200 µm to 300 µm) is formed. The mixing ratio of NiO powder and YSZ powder used for formation of the green sheet for the fuel electrode can be appropriately set, so long as its performance is attained.

### (Formation of green sheet for the solid electrolyte layer)

Butyral resin, DOP (plasticizer), FLOWLEN G-700 (dispersant), and a mixed solvent of toluene and ethanol are added to YSZ powder, followed by mixing with a ball mill, thereby preparing a slurry. A thin film is formed from the obtained slurry by the doctor blade method, whereby a green sheet for the solid electrolyte layer which has a predetermined thickness (for example, 10 µm) is formed.

### (Formation of a stacked body including the solid electrolyte layer 24 and the fuel electrode 21)

The green sheet for the fuel electrode and the green sheet for the solid electrolyte layer are bonded together, and debindering is performed at a predetermined temperature (for example, about 280°C). Furthermore, a stacked body including the debindered green sheets is fired at a predetermined temperature (for example, about 1,350°C). As a result, a stacked body including the solid electrolyte layer 24 and the fuel electrode 21 is obtained.

Notably, the method of manufacturing the cell is not limited to the present method, and the following method may be employed. Poly(vinyl alcohol) (PVA) serving as a binder is added to a mixture of NiO powder and YSZ powder, to thereby prepare a slurry, and the slurry is dried and granulated by using a spray dryer. A compact of the fuel electrode 21 is formed from the resultant granules by die press molding. Subsequently, water and a binder are added to YSZ powder, and the resultant mixture is mixed for 24 hours by using a ball mill, to thereby prepare a slurry. The slurry is applied to the compact of the fuel electrode 21 and shaped, whereby a compact of the solid electrolyte layer 24 is stacked and formed. The stacked body including these compacts is co-sintered in air in an electric furnace (in an oxygen-containing atmosphere) at, for example, 1,350°C, whereby a stacked body including the fuel electrode 21 and the solid electrolyte layer 24 is formed. Notably, a tape laying method, a printing method, etc. may be used for forming, on the fuel electrode 21, a film which becomes the solid electrolyte layer 24.

### (Formation of the reaction prevention layer 25)

Next, the reaction prevention layer 25 is formed. Specifically, polyvinyl alcohol (organic binder) and butyl carbitol (organic solvent) are added to GDC powder, followed by mixing and adjustment of the viscosity of the resultant mixture, whereby a paste for the reaction prevention layer is prepared. The obtained paste for the reaction prevention layer is applied, by means of, for example, screen printing, to the solid electrolyte layer 24 side surface of the above-mentioned stacked body including the solid electrolyte layer 24 and the fuel electrode 21, and firing is performed at, for example, 1,180°C. As a result, the reaction prevention layer 25 is formed, whereby a stacked body including the fuel electrode 21, the solid electrolyte layer 24, and the reaction prevention layer 25 (hereinafter referred to as an "intermediate stacked body") is fabricated.

### (Formation of the air electrode functional layer 26)

Next, the air electrode functional layer 26 is formed. First, LSCF powder, GDC powder, and trace additives are mixed with polyvinyl alcohol (organic binder) and butyl carbitol (organic solvent), followed by adjustment of the viscosity of the resultant mixture, whereby a paste for the air electrode functional layer is prepared. The trace additives include P (1 ppm or greater and 500 ppm or less), Cr (1 ppm or greater and 500 ppm or less), B (1 ppm or greater and 500 ppm or less), and Si (1 ppm or greater and 500 ppm or less). Subsequently, the prepared paste for the air electrode functional layer is applied, by means of, for example, screen printing, to the surface of the intermediate stacked body on the reaction prevention layer 25 side, and is then dried.

### (Formation of the air electrode current collecting layer 27)

Next, the air electrode current collecting layer 27 is formed. First, LSCF powder and trace additives are mixed with polyvinyl alcohol (organic binder), butyl carbitol (organic solvent), and organic beads (pore forming material), followed by adjustment of the viscosity of the resultant mixture, whereby a paste for the air electrode current collecting layer is prepared. The trace additives include P (1 ppm or greater and 500 ppm or less), Cr (1 ppm or greater and 500 ppm or less), B (1 ppm or greater and 500 ppm or less), and Si (1 ppm or greater and 500 ppm or less). Subsequently, the prepared paste for the air electrode current collecting layer is applied, by means of, for example, screen printing, to the surface of the intermediate stacked body on the air electrode functional layer 26 side, and is then dried. The intermediate stacked body with the paste for the current collecting layer applied thereto is fired at a predetermined firing temperature (for example, 1,100°C). As a result of this firing step, the air electrode current collecting layer 27 is formed, whereby a stacked body including the fuel electrode 21, the solid electrolyte layer 24, the reaction prevention layer 25, the air electrode functional layer 26, and the air electrode current collecting layer 27; i.e., a single electrolysis cell 20, is fabricated.

After that, in order to bring the electrolysis cell 20 into a state in which the electrolysis cell 20 can produce hydrogen, a reduction step of reducing the fuel electrode 21 (namely, reducing NiO contained in the fuel electrode 21 to Ni) is executed. The reduction step is realized by, for example, exposing the fuel electrode 21 to a hydrogen atmosphere at a predetermined temperature for a predetermined period of time. Notably, a reduction gas used in the reduction step is not limited to hydrogen, and other gases such as methane gas may be used. In addition, no limitation is imposed on the concentration of the reduction gas. The reduction gas in which the concentration of a reducing agent is less than 100% by volume may include nitrogen gas in addition to hydrogen gas, etc.

### (Method of producing the material of the air electrode 29)

An example of a method of producing the material of the air electrode 29 will be described below. Examples of a method of obtaining the complex oxide include a solid-phase method, a liquid-phase method, etc. Examples of the liquid-phase method include the citrate method, the Pechini method, and the coprecipitation method.

The "solid-phase method" is a method of mixing raw materials (powders), each containing a constituent element, at a predetermined ratio to obtain a powder mixture, firing the obtained mixture, and pulverizing the fired mixture, thereby obtaining a target material.

The "liquid-phase method" is a method of obtaining a target material through the steps of (i) dissolving raw materials, each containing a constituent element, into a solution, (ii) obtaining a precursor of the target material from the solution through precipitation or the like, and (iii) performing drying, firing, and pulverization.

The case where the material of the air electrode 29 is manufactured by using the solid-phase method and the case where the material of the air electrode 29 is manufactured by using the liquid-phase method will be described successively with reference to the drawings.

### (Method of producing the material of the air electrode 29 by using the solid-phase method)

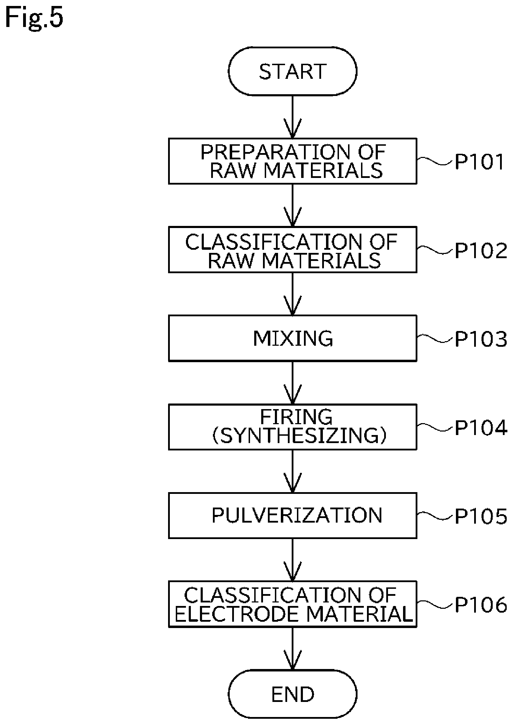

FIG. 5 is a flowchart used for describing the method of producing the material of the air electrode 29 by using the solid-phase method.

Firstly, in step P101, raw materials selected in accordance with the type of the complex oxide are provided. In the case where LSCF is produced as a complex oxide, for example, La₂O₃, SrCO₃, Co₃O₄, and Fe₂O₃ are provided. The volume-average particle diameter of La₂O₃ is preferably 0.1 µm to 0.7 µm, the volume-average particle diameter of SrCO₃ is preferably 0.1 µm to 0.5 µm, the volume-average particle diameter of Co₃O₄ is preferably 0.1 µm to 1.0 µm, and the volume-average particle diameter of Fe₂O₃ is preferably 0.1 µm to 0.8 µm. Moreover, it is preferred that the particle size distributions of the raw materials are controlled. Specifically, it is desired to remove in advance coarse particles of 20 µm or larger by using an air classifier or the like. Removal of coarse particles is effective for homogenization at the times of mixing and synthesis in subsequent steps. As a result, the standard deviation in each element atomic concentration of the complex oxide can be adjusted.

Next, in step P102, each raw material is subjected to classification. Specifically, the specific surface area of each raw material is adjusted by performing the classification by using, for example, an air classifier. In the case where LSCF is produced as a complex oxide, it is preferred to adjust the specific surface area of La₂O₃ to 1 m²/g to 5 m²/g, the specific surface area of SrCO₃ to 1 m²/g to 7 m²/g, the specific surface area of Co₃O₄ to 1 m²/g to 7 m²/g, and the specific surface area of Fe₂O₃ to 1 m²/g to 10 m²/g.

Next, in step P103, the raw materials are mixed at predetermined mixing proportions. In the present embodiment, this mixing step includes a sub-step of weighing the raw materials at the predetermined mixing proportions and putting them in a pot mill together with balls (for example, balls formed of alumina or zirconia can be used), a sub-step of rotating the pot mill in a dry condition for a predetermined period of time (10 hours to 120 hours) and then pouring a predetermined amount (50% to 200% (mass ratio with respect to the raw materials)) of a solvent (e.g., deionized water (aqueous), acetone (solvent-type), etc.) into the pot mill, and a sub-step of further rotating the pot mill in a wet condition for a predetermined period of time (10 hours to 300 hours). In order to mix the raw material powders uniformly in the wet mixing, it is preferable to fully crush the raw powders under appropriate mixing conditions in the dry mixing. Notably, the balls preferably have a diameter of 0.5 mm to 5 mm, and the total mass of the balls is preferably adjusted to about 0.5 times to 3 times the total mass of the material powders.

In this mixing step, it is preferred to add predetermined additives to each raw material. The additives are P (phosphorus), Cr (chromium), B (boron), and Si (silicon). When represented by the ratio with respect to the entire mass of the complex oxide, the air electrode 29 contains P at 1 ppm or greater and 500 ppm or less, preferably 1 ppm or greater and 50 ppm or less, more preferably 1 ppm or greater and 30 ppm or less. When represented by the ratio with respect to the entire mass of the complex oxide, the air electrode 29 contains Cr at 1 ppm or greater and 500 ppm or less, preferably 1 ppm or greater and 100 ppm or less. When represented by the ratio with respect to the entire mass of the complex oxide, the air electrode 29 contains B at 1 ppm or greater and 500 ppm or less, preferably 1 ppm or greater and 50 ppm or less, more preferably 1 ppm or greater and 10 ppm or less. When represented by the ratio with respect to the entire mass of the complex oxide, the air electrode 29 contains Si at 1 ppm or greater and 500 ppm or less, preferably 1 ppm or greater and 100 ppm or less. Notably, these additives are preferably added in the form of oxide. Such additives have a function of uniformly dispersing and mixing the components and are important factors for controlling (uniformizing) the compositional distribution of the electrode material by combining the wet mixing in the latter step in addition to the raw material crushing in the dry mixing of the former step. In the case where LSCF is produced as a complex oxide, an example of the method of adjusting the mixing proportions of the raw materials is a method of adjusting the proportions of La₂O₃, SrCO₃, Co₃O₄, and Fe₂O₃ in accordance with the composition of the complex oxide.

After the wet mixing, drying is required to remove the solvent. Drying can be performed by using, for example, a box dryer (tray dryer), a band dryer, a spray dryer, or the like.

Next, in step P104, the dried powder mixture material is fired in a firing furnace, thereby synthesizing the material of the air electrode 29. Firing is basically and preferably composed of three firing steps; i.e., pre-calcination, calcination, and final firing. However, firing may be composed of two firing steps; i.e., pre-calcination and final firing, or calcination and final firing, or may be composed of final firing only. Different firing temperatures are employed in pre-calcination, calcination, and final firing. The material of a firing container may be alumina, and the examples of the alumina-based material include mullite and cordierite.

### (Pre-calcination)

In the pre-calcination step, it is preferred to perform an operation of increasing the temperature of the firing furnace to a target firing temperature (300 to 500°C) at a temperature elevation rate of 20 to 800°C/hour. Although no particular limitation is imposed on the firing temperature at the time of pre-calcination, the firing temperature is preferably, for example, 300 to 500°C, more preferably 350 to 450°C. By setting the firing temperature to 300°C or higher, remaining of the carbon component can be suppressed. In addition, by setting the firing temperature to 500°C or lower, segregation of the constituent elements can be suppressed. Although no particular limitation is imposed on the firing time for pre-calcination, the firing time is preferably, for example, 4 to 24 hours, more preferably 8 to 20 hours. By setting the firing time to 4 hours or longer, remaining of the carbon component can be suppressed. The atmosphere of the firing furnace during pre-calcination is preferably an oxygen-containing atmosphere, more preferably, pre-calcination is performed in the air (in the air atmosphere) or in an atmosphere in which the oxygen concentration is 20% by volume or less. By performing pre-calcination in the atmosphere whose oxygen concentration is 20% by volume or less, it is possible to suppress localization of the constituent elements of the product, which would otherwise occur because the carbon component in the material powder mixture burns and oxidation reaction progresses locally.

Next, the oxide obtained in the pre-calcination step is crushed. Crushing is performed by using a crusher such as a pot mill, a jet mill, or an atomizer, generally in a dry condition. The volume-average particle diameter of the crushed oxide is preferably 5 to 50 µm, more preferably 5 to 10 µm. Moreover, it is preferred to control the particle size distribution of the raw material. Specifically, it is desired to previously remove coarse particles of 50 µm or larger by using an air classifier or the like. By virtue of this, the standard deviation in each element atomic concentration of the complex oxide can be adjusted.

### (Calcination)

Subsequently, the crushed pre-calcinated powder described above is calcined at a calcination temperature (500 to 800°C). In the calcination step, it is preferred to increase the temperature of the firing furnace to a target firing temperature at a temperature elevation rate of 100 to 400°C/hour. Although no particular limitation is imposed on the temperature for calcination, the temperature is preferably, for example, 500 to 800°C, more preferably 600 to 800°C. By setting the temperature for calcination to 500°C or higher, remaining of the carbon component can be suppressed. In addition, by setting the temperature for calcination to 800°C or lower, excessive sintering of fired powder can be suppressed. Although no particular limitation is imposed on the firing time for calcination, the firing time is preferably, for example, 4 to 24 hours, more preferably 8 to 20 hours. By setting the firing time to 4 hours or longer, remaining of the carbon component can be suppressed. The atmosphere of the firing furnace during calcination is preferably an oxygen-containing atmosphere which is similar to that employed at the time of pre-calcination.

Next, the oxide obtained through calcination is crushed in the same manner as the crushing performed after pre-calcination. Crushing is preferably performed by using a crusher such as a pot mill, a jet mill, or an atomizer, generally in a dry condition. The volume-average particle diameter of the crushed oxide is preferably 5 to 30 µm, more preferably 5 to 10 µm. Moreover, it is preferred to control the particle size distribution of the raw material. Specifically, it is desired to previously remove coarse particles of 30 µm or larger by using an air classifier or the like. By virtue of this, the standard deviation in each element atomic concentration of the complex oxide can be adjusted.

### (Final firing)

Moreover, final firing of this calcinated powder is performed at a final firing temperature (800 to 1,400°C). In the final firing step, the temperature of the firing furnace is increased to a target firing temperature at a temperature elevation rate of preferably 50 to 800°C/hour, more preferably 100 to 400°C/hour. By limiting the temperature elevation rate to 800°C/hour or less, it is possible to suppress generation of a by-product in the fired product, which would otherwise occur because chemical changes of reactive substances do not proceed sufficiently at each temperature and the firing temperature reaches the target firing temperature in a state in which the reactive substances are nonuniform. Although no particular limitation is imposed on the temperature for final firing, the temperature is preferably, for example, 800 to 1,400°C, more preferably 1,000 to 1,400°C. By setting the temperature to the preferred range, it is possible to suppress the possibility that a desired crystal phase is not formed. Although no particular limitation is imposed on the firing time, the firing time is preferably, for example, 4 to 24 hours, more preferably 5 to 20 hours. By setting the firing time to 4 hours or longer, it becomes possible to suppress the mixing of unreacted substances into the target oxide and suppress the possibility that the target crystal phase is not formed although a single crystal phase is obtained. By virtue of this, the standard deviation in each element atomic concentration of the complex oxide can be adjusted. In addition, since the firing time is 24 hours or shorter, it is possible to suppress lowering of productivity.

The atmosphere of the firing furnace during final firing is preferably an oxygen-containing atmosphere which is similar to that employed at the time of pre-calcination or calcination. After performance of final firing for a predetermined period of time, the temperature of the firing furnace is lowered to room temperature. The temperature lowering rate is preferably 50 to 800°C/hour. Since the temperature lowering rate is 50°C/hour or larger, the productivity is improved. In addition, since the temperature lowering rate is 800°C/hour or smaller, it is possible to suppress the possibility that a target substance is not formed. Next, the oxide obtained through final firing is crushed in the same manner as the crushing performed after pre-calcination. Crushing is performed by using a crusher such as a pot mill, a jet mill, or an atomizer, generally in a dry condition. The volume-average particle diameter of the crushed powder is preferably 5 to 20 µm, more preferably 5 to 10 µm. Moreover, it is preferred to control the particle size distribution of the raw material. Specifically, it is desired to remove in advance coarse particles of 20 µm or larger by using an air classifier or the like. By virtue of this, the standard deviation in each element atomic concentration of the complex oxide can be adjusted.

Next, in step P105, the mass of synthesized material of the air electrode 29 is pulverized. As in the case of crushing, pulverization is performed by using a crusher such as a pot mill, a jet mill, or an atomizer, generally in a dry condition. In the case where the pot mill is used, it is preferred to adjust the average particle diameter of the material of the air electrode 29 to 0.3 µm to 1.2 µm by putting the material of the air electrode 29 into the pot mill together with balls (for example, balls formed of alumina or zirconia can be used), and rotating the pot mill for a predetermined period of time (5 hours to 20 hours). When necessary, wet pulverization may be performed for particle size adjustment.

By successively performing pre-calcination, calcination, and final firing as described above, a material which has a more uniform composition and a better crystallinity is produced.

Next, in step P106, the pulverized material of the air electrode 29 is subjected to classification. Specifically, the specific surface area of the material of the air electrode 29 can be adjusted by performing the classification by using, for example, an air classifier. In the case where LSCF is produced as a complex oxide, it is preferred to adjust the specific surface area to 3 m²/g to 12 m²/g.

### (Method of producing the material of the air electrode 29 by using the liquid-phase method)

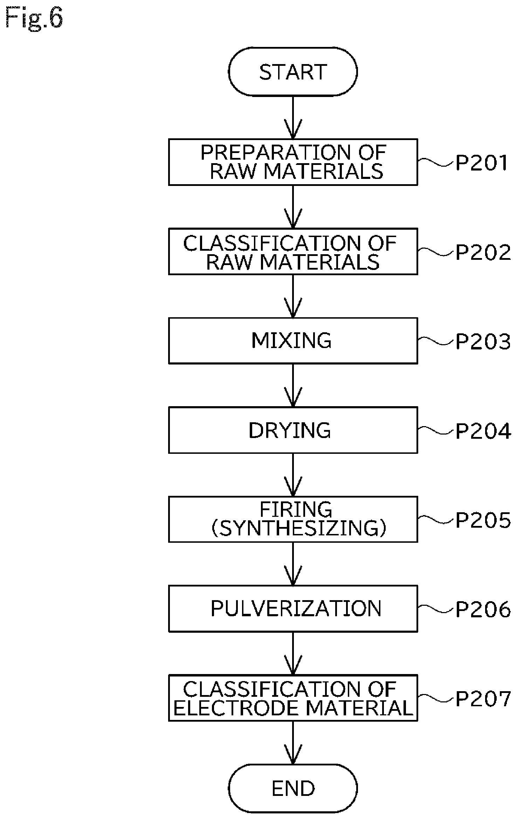

FIG. 6 is a flowchart used for describing the method of producing the material of the air electrode 29 by using the liquid-phase method.

Firstly, in step P201, raw materials selected in accordance with the type of the complex oxide are provided. In the case where LSCF is produced, as a complex oxide, by the coprecipitation method or the citrate method, La(NO₃)₃·6H₂O, Sr(NO₃)₂, Co(NO₃)₃·9H₂O, and Fe(NO₃)₃·9H₂O are provided. The volume-average particle diameter of La(NO₃)₃·6H₂O is preferably 0.3 µm to 0.6 µm, the average particle diameter of Sr(NO₃)₂ is preferably 0.1 µm to 0.4 µm, the average particle diameter of Co(NO₃)₃·9H₂O is preferably 0.2 µm to 0.5 µm, and the average particle diameter of Fe(NO₃)₃·9H₂O is preferably 0.3 µm to 0.8 µm. Notably, in the case where LSCF is produced by the Pechini method, La₂O₃, SrO₃, Co₃O₄ and Fe(NO₃)₃·9H₂O having the above-described average particle diameters are provided. Moreover, it is preferred to control the particle size distribution of the raw material. Specifically, it is desired to remove in advance coarse particles of 15 µm or larger by using an air classifier or the like. Removal of coarse particles is effective for homogenization at the times of mixing and synthesis in subsequent steps.

Next, in step P202, each raw material is subjected to classification. Specifically, the specific surface area of each raw material is adjusted by performing the classification by using, for example, an air classifier. In the case where LSCF is produced as a complex oxide by the coprecipitation method or the citrate method, it is preferred to adjust the specific surface area of La(NO₃)₃·6H₂O to 2 m²/g to 8 m²/g, the specific surface area of Sr(NO₃)₂ to 1 m²/g to 5 m²/g, the specific surface area of Co(NO₃)₃·9H₂O to 2 m²/g to 5 m²/g, and the specific surface area of Fe(NO₃)₃·9H₂O to 3 m²/g to 10 m²/g.

Next, in step P203, the raw materials are mixed at predetermined mixing proportions. Specifically, in the case where LSCF is produced by the coprecipitation method, each raw material is dissolved in pure water to prepare a 0.2 M aqueous solution and then an aqueous nitrate solution is added thereto, while a precipitant is added under stirring. In the case where LSCF is produced by the citrate method, each raw material is dissolved in pure water, citric acid is added until all the metals are precipitated, and the viscosity of the solution is adjusted by dehydration after heating the solution in water bath at about 60°C. In the case where LSCF is produced by the Pechini method, aqueous nitrate solutions of all raw materials are prepared and mixed together, and citrate and ethylene glycol are added to the mixture.

In this mixing step, it is preferred to add predetermined additives to each raw material. The predetermined additives are P (phosphorus), Cr (chromium), B (boron), and Si (silicon). When represented by the ratio with respect to the entire mass of the complex oxide, the air electrode 29 contains P at 1 ppm or greater and 500 ppm or less, preferably 1 ppm or greater and 50 ppm or less, more preferably 1 ppm or greater and 30 ppm or less. When represented by the ratio with respect to the entire mass of the complex oxide, the air electrode 29 contains Cr at 1 ppm or greater and 500 ppm or less, preferably 1 ppm or greater and 100 ppm or less. When represented by the ratio with respect to the entire mass of the complex oxide, the air electrode 29 contains B at 1 ppm or greater and 500 ppm or less, preferably 1 ppm or greater and 50 ppm or less, more preferably 1 ppm or greater and 10 ppm or less. When represented by the ratio with respect to the entire mass of the complex oxide, the air electrode 29 contains Si at 1 ppm or greater and 500 ppm or less, preferably 1 ppm or greater and 100 ppm or less. Such additives have a function of uniformly dispersing and mixing the components. In addition, at the time of synthetic heat treatment as well, these additives can prevent each element from becoming ununiform (for example, phase separation, precipitation of a different phase, etc.). Therefore, it becomes possible to uniformize the compositional distribution of the electrode material by appropriately controlling the addition amounts of these additives.

Next, in step P204, the aqueous solution prepared in step P203 is dried. In the coprecipitation method, the aqueous solution can be vacuum-dried at about 110°C. In the citrate method, the aqueous solution can be dried at about 70°C. In the Pechini method, the aqueous solution can be dried at about 200°C.

Next, in step P205, the dried raw material is fired, thereby synthesizing the material of the air electrode 29. The details of this step are the same as those in the above-described step P104.

Next, in step P206, the mass of synthesized material of the air electrode 29 is pulverized, and, in step P207, the crushed material of the air electrode 29 is subjected to classification. The details of step P206 are the same as those in the above-described step P105, and the details of step P207 are the same as those in the above-described step P106.

The present inventor found that, in the case where the air electrode 29 containing a complex oxide having a perovskite structure contains P at 1 ppm or greater and 500 ppm or less, Cr at 1 ppm or greater and 500 ppm or less, B at 1 ppm or greater and 500 ppm or less, and Si at 1 ppm or greater and 500 ppm or less with respect to the entire mass of the complex oxide, during use of the solid oxide electrolysis cell, occurrence of cracking in the air electrode 29 and separation at the interface between the air electrode 29 and the solid electrolyte layer 24 can be suppressed. As a result, it is possible to enhance the durability of the electrolysis cell 20. Although this mechanism is not certain, it is considered that, when the P, Cr, B, and Si contents in the air electrode 29 are adjusted to fall within the above-described respective ranges, these elements act as sintering aids, thereby promoting the densification of the air electrode 29. In the below, a test performed for determining the relation between each element concentration and presence and absence of cracking will be described.

### (Test)

In this test, a plurality of samples (fired bodies) of the electrolysis cell according to the above-described embodiment were fabricated. Specifically, as shown in Table 2, 16 samples were fabricated. Of Sample No. 1 to Sample No. 16, sample No. 1 was chosen as an example. The element concentrations of the sites A and B of the complex oxide having a perovskite structure in a cross section of the air electrode of Sample No. 1 were measured. Table 1 shows the measured element concentrations and the calculated average values and standard deviations of these element concentrations.

### [Table 1]

**Table 1**

| Analyzing spot | La (mol%) | Sr (mol%) | Co (mol%) | Fe (mol%) |
|---|---|---|---|---|
| 1 | 25.2 | 24.8 | 5.3 | 44.7 |
| 2 | 20.4 | 18.6 | 14.9 | 46.1 |
| 3 | 27.5 | 24.5 | 6.2 | 41.8 |
| 4 | 34.3 | 28.1 | 7.1 | 30.5 |
| 5 | 30.8 | 14.3 | 14.4 | 40.5 |
| 6 | 21.1 | 14.5 | 15.3 | 49.1 |
| 7 | 31.5 | 24.5 | 5.9 | 38.1 |
| 8 | 33.7 | 19.3 | 14.2 | 32.8 |
| 9 | 35.1 | 22.9 | 10.5 | 31.5 |
| 10 | 34.4 | 14.3 | 9.4 | 41.9 |
| Average value | 29.4 | 20.58 | 10.32 | 39.7 |
| Standard deviation | 5.27 | 4.82 | 3.88 | 6.05 |

Table 2 shows the results of evaluation. Specifically, Table 2 shows, for each of Sample No. 1 to Sample No. 16, the standard deviation in each element atomic concentration; the additive contents in the complex oxide; and the current density at the thermoneutral voltage and occurrence of separation/cracking after the heat cycle test.

### [Table 2]

**Table 2**

| Sample No. | Synthesizing method | Standard deviation | | | | Additive contents in complex oxide (ppm) | | | | Current density at thermoneutral voltage (1.3 V) (A/cm²) | Occurrence of separation/cracking | Evaluation results |
|---|---|---|---|---|---|---|---|---|---|---|---|---|
| | | Site A | | Site B | | | | | | | | |
| | | La | Sr | Co | Fe | P | Cr | B | Si | | | |
| 1 | Solid-phase method | 5.27 | 4.82 | 3.88 | 6.05 | 12 | 205 | 29 | 6 | 0.89 | No separation observed · No cracking observed | ○ |
| 2 | Solid-phase method | 7.45 | 6.58 | 5.56 | 7.38 | 33 | 13 | 50 | 500 | 0.88 | No separation observed · No cracking observed | ○ |
| 3 | Solid-phase method | 7.42 | 13.4 | 10.9 | 7.25 | 39 | 220 | 48 | 95 | 0.81 | No separation observed · No cracking observed | ○ |
| 4 | Solid-phase method | 13.6 | 8.51 | 7.64 | 14.2 | 48 | 505 | 95 | 354 | 0.61 | Separation observed · Cracking observed | × |
| 5 | Solid-phase method | 1.34 | 0.98 | 2.21 | 1.02 | 6 | 98 | 9 | 95 | 0.91 | No separation observed · No cracking observed | ○ |
| 6 | Solid-phase method | 3.25 | 4.32 | 2.54 | 1.25 | 50 | 25 | 33 | 152 | 0.88 | No separation observed · No cracking observed | ○ |
| 7 | Solid-phase method | 12.9 | 2.25 | 7.25 | 8.12 | 24 | 500 | 42 | 250 | 0.77 | No separation observed · No cracking observed | ○ |
| 8 | Solid-phase method | 7.02 | 15.1 | 14.2 | 9.25 | 65 | 315 | 14 | 520 | 0.62 | Separation observed · Cracking observed | × |
| 9 | Solid-phase method | 6.52 | 5.54 | 15.4 | 13.8 | 19 | 741 | 62 | 364 | 0.59 | Separation observed · Cracking observed | × |
| 10 | Liquid-phase method | 1.03 | 0.78 | 0.91 | 0.39 | 9 | 51 | 10 | 403 | 0.89 | No separation observed · No cracking observed | ○ |
| 11 | Liquid-phase method | 0.89 | 1.02 | 0.88 | 0.68 | 30 | 81 | 5 | 13 | 0.91 | No separation observed · No cracking observed | ○ |
| 12 | Solid-phase method | 14.8 | 4.11 | 13.6 | 5.26 | 105 | 608 | 41 | 765 | 0.71 | Separation observed · No cracking observed | × |
| 13 | Solid-phase method | 9.32 | 13.6 | 13.9 | 15.2 | <1 | 194 | <1 | 110 | 0.63 | Separation observed · Cracking observed | × |
| 14 | Solid-phase method | 15.2 | 5.02 | 6.78 | 13.6 | 32 | <1 | 20 | <1 | 0.65 | Separation observed · Cracking observed | × |
| 15 | Solid-phase method | 10.5 | 3.87 | 6.62 | 13.5 | 485 | 78 | 239 | 45 | 0.76 | No separation observed · No cracking observed | ○ |
| 16 | Solid-phase method | 13.3 | 5.88 | 13.1 | 4.55 | 308 | 68 | 493 | 35 | 0.75 | No separation observed · No cracking observed | ○ |

In these samples, the thickness of the fuel electrode 21 (NiO-YSZ) was 400 µm, the thickness of the solid electrolyte layer 24 (8YSZ) was 10 µm, the thickness of the air electrode 29 (LSCF) was 100 µm; i.e., these thicknesses were the same among the samples. The shape of each sample as viewed from the above was a square shape of 10 cm × 10 cm.

Hydrogen was used as the reducing agent in the reduction gas. The reduction gas in which the concentration of the reducing agent was 100% by volume was composed of hydrogen only. Air was used as the gas on the air electrode side at the time of the reducing process.

By using the electrolysis cell fabricated as described above, the current density at 1.3 V was measured at 700°C.

A heat cycle test was conducted for the present cell by using an infrared lamp. The heat cycle test was repeated 50 times under the condition that the cell was heated to 700°C over 10 minutes and then cooled to normal temperature over 30 minutes. After the heat cycle test, the current density at 1.3 V was measured again at 700°C. Each sample whose current density at the time of remeasurement was 0.75 A/cm² (reference value) or greater was evaluated as good ("○"). Each sample whose current density at the time of remeasurement was less than 0.75 A/cm² was evaluated as bad ("×"). For the electrolysis cells for which the heat cycle test had been conducted, the presence/absence of cracking in the surface of the air electrode and the presence/absence of separation at the interface between the air electrode and the electrolyte layer were checked through observation under a microscope.

It was found from the results shown in Table 2 that, in the case where the air electrode contained P at 1 ppm or greater and 500 ppm or less, Cr at 1 ppm or greater and 500 ppm or less, B at 1 ppm or greater and 500 ppm or less, and Si at 1 ppm or greater and 500 ppm or less with respect to the entire mass of the complex oxide, separation or cracking was not observed.

The present invention is not limited to the above-described embodiment, and may be carried out in various configurations, so long as they do not depart from the gist of the invention. For example, technical features in the embodiment corresponding to technical features in the modes described in "SUMMARY OF INVENTION" may be appropriately replaced or combined in order to solve the entirety or a part of the aforementioned problems or to attain the entirety or a part of the aforementioned effects. Unless described as essential features in the present specification, the technical features may be appropriately deleted.

As long as the electrolysis cell includes the fuel electrode 21, the solid electrolyte layer 24, and the air electrode 29, it is possible to change the electrolysis cell; i.e., the shapes, materials, sizes, etc. of the constituent elements can be changed, and provision/omission of other constituent elements can be changed. For example, the configuration of the electrolysis cell may be changed as follows.
(1) The electrolysis cell may be, for example, a fuel electrode support type, have a flat-plate-like shape or a cylindrical shape, be a flat type, a vertical-stripe type, or a horizontal-stripe type, or be used for a single-end supported stack or for a double-end supported stack. Also, the cell may have an elliptical cross section.
(2) The configurations described as different modes may be combined with each other.

### DESCRIPTION OF REFERENCE NUMERALS

10: electrolysis stack, 11: reaction unit, 12,13: end plate, 14: bolt, 15a, 15b, 15c, 15d: passage, 16: inter connector, 17: fuel electrode frame, 19: air electrode frame, 20: electrolysis cell, 21: fuel electrode, 24: solid electrolyte layer, 24a: front surface, 25: reaction prevention layer, 26: air electrode functional layer, 27: air electrode current collecting layer, 29: air electrode, 30: separator, 31: brazing filler metal, 32: current collector, 33: fuel chamber, 34: current collector, 35: air chamber, 37: opening, 47: separator-equipped cell, 52, 53: terminal plate, 60: hydrogen production apparatus, 61: hot module, 62: vaporizer, 63: heat exchanger, 64: heater, 65: heat insulator, 66: condenser

## Claims

1. An air electrode of a solid oxide electrolysis cell, the air electrode containing a complex oxide having a perovskite structure,
wherein the air electrode contains P at 1 ppm or greater and 500 ppm or less, Cr at 1 ppm or greater and 500 ppm or less, B at 1 ppm or greater and 500 ppm or less, and Si at 1 ppm or greater and 500 ppm or less with respect to the entire mass of the complex oxide.

2. The air electrode of a solid oxide electrolysis cell according to claim 1, wherein the air electrode contains P at 1 ppm or greater and 50 ppm or less and B at 1 ppm or greater and 50 ppm or less with respect to the entire mass of the complex oxide.

3. A solid oxide electrolysis cell comprising:
the air electrode as recited in claim 1;
a fuel electrode; and
a solid electrolyte layer disposed between the air electrode and the fuel electrode.

4. The solid oxide electrolysis cell according to claim 3, wherein a fuel gas containing water vapor is supplied to the fuel electrode at a flow rate of 100 to 130 liters/(min·cm²).

5. The solid oxide electrolysis cell according to claim 3 or 4, wherein a gas containing oxygen is supplied to the air electrode at a flow rate of 30 to 50 liters/(min·cm²).

6. The solid oxide electrolysis cell according to claim 3 or 4, wherein an air chamber that the air electrode faces has a volume of 9 cm³ to 11 cm³.

7. A separator-equipped cell comprising:
the solid oxide electrolysis cell as recited in claim 3; and
a separator which is disposed on the solid electrolyte layer and has an opening at its center.

8. An electrolysis stack in which a plurality of the solid oxide electrolysis cells as recited in claim 3 are stacked.

9. A hot module comprising:
the electrolysis stack as recited in claim 8;
a vaporizer for producing water vapor to be supplied to the electrolysis stack;
a heat exchanger for performing heat exchange with a gas to be supplied to the electrolysis stack;
a heater for heating the electrolysis stack; and
a heat insulator in which the electrolysis stack, the vaporizer, the heat exchanger, and the heater are disposed.

10. A hydrogen production apparatus comprising the hot module as recited in claim 9.
